# EUROPÄISCHE PATENTSCHRIFT

(11) **EP 3 332 506 B1**
(45) Veröffentlichungstag und Bekanntmachung des Hinweises auf die Patenterteilung: **29.04.2020**
(21) Anmeldenummer: 16766877.1
(22) Anmeldetag: 06.09.2016
(51) Int. Cl.: H04L 12/24, G06F 11/20, B61L 15/00, H04L 12/40, G06F 13/24, G06F 13/42, H04L 12/413

(54) **VERFAHREN ZUM BETREIBEN EINES DATENÜBERTRAGUNGSSYSTEMS UND DATENÜBERTRAGUNGSSYSTEM**
METHOD FOR OPERATING A DATA TRANSFER SYSTEM, AND DATA TRANSFER SYSTEM
PROCÉDÉ POUR FAIRE FONCTIONNER UN SYSTÈME DE TRANSMISSION DE DONNÉES ET SYSTÈME DE TRANSMISSION DE DONNÉES

(30) Priorität: 30.09.2015 DE 102015218906
(43) Veröffentlichungstag der Anmeldung: 13.06.2018
(73) Patentinhaber: Siemens Mobility GmbH, 81739 München (DE)
(72) Erfinder: DIRAUF, Michael, 96231 Bad Staffelstein (DE)
(86) Internationale Anmeldenummer: PCT/EP2016/070962
(87) Internationale Veröffentlichungsnummer: WO 2017/055026

(56) Entgegenhaltungen:
- EP-A2- 2 133 255
- GB-A- 2 450 520
- US-A1- 2009 276 666

## Beschreibung

Die Erfindung betrifft ein Verfahren zum Betreiben eines Datenübertragungssystems, bei dem eine erste Datenübertragungseinrichtung mit einer ersten Datenleitung verbunden ist, welche mit einer ersten Datenschnittstelle eines Steuergeräts verbunden ist, eine zweite Datenübertragungseinrichtung mit einer zweiten Datenleitung verbunden ist, welche mit einer zweiten Datenschnittstelle des Steuergeräts verbunden ist, und über die erste Datenschnittstelle Daten übertragen werden.

Datenübertragungssysteme können unter anderem aus Redundanzgründen mehrere Datenübertragungseinrichtungen aufweisen. So kann beispielsweise, falls eine der Datenübertragungseinrichtungen ausfällt bzw. einen Defekt aufweist, eine der anderen Datenübertragungseinrichtungen zur Übertragung von Daten genutzt werden. Weiterhin können Datenübertragungssysteme aus Kompatibilitätsgründen mehrere Datenübertragungseinrichtungen unterschiedlichen Typs, insbesondere mehrere Busse unterschiedlichen Typs, aufweisen.

Datenübertragungssysteme mit mehreren Datenübertragungseinrichtungen, insbesondere mit mehreren parallelen Bussen, sind unter anderem aus dem Schienenverkehrswesen bekannt. Beispielsweise können bei einem Schienenfahrzeugverband mehrere Zugbusse zur Übertragung von Daten zwischen einem Steuergerät und einer zu steuernden Komponente des Schienenfahrzeugverbands vorhanden sein. Die einzelnen Zugbusse können jeweils als Zugbus mit einem einzigen Zugbusabschnitt, der in einem Triebwagen des Schienenfahrzeugverbands angeordnet ist, oder als Zugbus mit mehreren miteinander verbundenen Zugbusabschnitten, die in unterschiedlichen Triebwagen des Schienenfahrzeugverbands angeordnet sind, ausgebildet sein.

Welcher von mehreren Zugbussen eines Schienenfahrzeugverbands zur Übertragung von Daten genutzt werden soll, kann beispielsweise gemäß dem Verfahren aus DE 10 2006 008 065 B4 festgelegt werden.

EP 2 133 255 A2 beschreibt eine Schienenfahrzeugsteuerung mit zwei Datenübertragungseinrichtungen unterschiedlichen Typs. Das Schienenfahrzeug hat wenigstens einen ersten Wagen. Der erste Wagen umfasst eine Steuereinrichtung zur Steuerung entfernter Komponenten des Schienenfahrzeugs und eine mit der Steuereinrichtung verbundene erste Datenübertragungseinrichtung eines ersten Typs zur Übertragung von Steuerdaten der Steuereinrichtung zu den entfernten Komponenten. Eine zweite Datenübertragungseinrichtung eines von dem ersten Typ verschiedenen zweiten Typs ist zur Übertragung von Steuerdaten der Steuereinrichtung zu den entfernten Komponenten vorgesehen. Eine erste Steuereinheit der Steuereinrichtung ist mit der ersten Datenübertragungseinrichtung verbunden. Eine zweite Steuereinheit der Steuereinrichtung ist mit der zweiten Datenübertragungseinrichtung verbunden. Die Steuereinrichtung ist ausgebildet, von der Nutzung der ersten Datenübertragungseinrichtung auf eine Nutzung der zweiten Datenübertragungseinrichtung umzuschalten. Das Umschalten erfolgt über eine Umschalteinrichtung der Steuereinrichtung, über welche die erste Steuereinheit oder die zweite Steuereinheit mit einer Energieversorgungseinrichtung verbunden werden kann. Nur diejenige Steuereinheit, die mit der Energieversorgungseinrichtung verbunden ist, ist aktiv, während die andere deaktiviert ist.

Eine Aufgabe der Erfindung ist es, ein Verfahren anzugeben, mit dem ein Datenübertragungssystem, welches mehrere Datenübertragungseinrichtungen aufweist, verbessert betrieben werden kann.

Diese Aufgabe wird durch ein Verfahren der eingangs genannten Art gelöst, bei dem erfindungsgemäß eine Übertragung von Daten über die zweite Datenschnittstelle unterbunden wird, wobei eine Energieversorgung der zweiten Datenschnittstelle abgeschaltet wird, um die Übertragung von Daten über die zweite Datenschnittstelle zu unterbinden. Die Erfindung ist in den beigefügten Ansprüchen offenbart.

Die Erfindung geht von der Erkenntnis aus, dass bei einem Datenübertragungssystem mit mehreren Datenübertragungseinrichtungen Daten, die nicht nur über eine der Datenübertragungseinrichtungen, sondern (unbeabsichtigt) parallel über mehrere der Datenübertragungseinrichtungen übertragen werden, zu unterschiedlichen Interpretationen in einem oder mehreren Geräten des Datenübertragungssystems führen können, z.B. weil die Datenübertragungseinrichtungen unterschiedliche Kommunikationsprotokolle verwenden. Dies kann wiederum dazu führen, dass ein solches Gerät fehlerhafte bzw. unzulässige Daten über mindestens eine der Datenübertragungseinrichtungen versendet. Folglich können sich die unterschiedlichen Datenübertragungseinrichtungen gegenseitig beeinflussen.

Wird eine erste Datenübertragungseinrichtung des Datenübertragungssystems zur Übertragung von Daten genutzt und soll eine zweite Datenübertragungseinrichtung des Datenübertragungssystems nicht genutzt werden, kann also eine unbeabsichtigte parallele Übertragung von Daten über die zweite Datenübertragungseinrichtung eine unbeabsichtigte bzw. unzulässige Handlung eines mit der zweiten Datenübertragungseinrichtung verbundenen Geräts verursachen.

Falls eine Übertragung von Daten über eine mit der ungenutzten zweiten Datenübertragungseinrichtung verbundene Datenschnittstelle unterbunden wird, kann ein Gerät, das diese Datenschnittstelle aufweist, von der zweiten Datenübertragungseinrichtung kommunikativ entkoppelt werden. Auf diese Weise kann vermieden werden, dass eine unbeabsichtigte und/oder fehlerhafte Datenübertragung in der zweiten Datenübertragungseinrichtung eine unbeabsichtigte bzw. unzulässige Handlung dieses Geräts auslöst. Des Weiteren kann vermieden werden, dass das Gerät eine unbeabsichtigte und/oder fehlerhafte Datenübertragung in der zweiten Datenübertragungseinrichtung bewirkt.

Die Erfindung ermöglicht somit einen zuverlässigen Betrieb des Datenübertragungssystems. Insbesondere kann ein zuverlässiger Betrieb der Geräte des Datenübertragungssystems erreicht werden.

Dadurch, dass die Übertragung von Daten über die zweite Datenschnittstelle unterbunden wird, kann weiterhin eine gegenseitige Beeinflussung der ersten und der zweiten Datenübertragungseinrichtung über die zweite Datenleitung, welche sowohl mit der zweiten Datenschnittstelle als auch mit der zweiten Datenübertragungseinrichtung verbunden ist, vermieden werden.

Unter einer Datenschnittstelle kann vorliegend eine Geräteschnittstelle eines Geräts, insbesondere eines Steuergeräts, verstanden werden. Als Datenschnittstelle kann weiterhin eine Schnittstelle zwischen physischen Systemen aufgefasst werden, welche dazu eingerichtet ist, Daten zwischen den physischen Systemen zu übertragen.

Zweckmäßigerweise sind die Datenübertragungseinrichtungen sowie die Datenleitungen Elemente des Datenübertragungssystems. Weiter ist es zweckmäßig, wenn die Datenschnittstellen Elemente des Datenübertragungssystems sind.

Erfindungsgemäß wird eine elektrische Energieversorgung der zweiten Datenschnittstelle abgeschaltet. Das Abschalten der Energieversorgung kann beispielsweise mittels einer Unterbrechungseinrichtung, insbesondere mittels eines Schalters, erfolgen. Hierbei kann z.B. eine Energieversorgungsleitung unterbrochen werden. Das Abschalten der Energieversorgung der zweiten Datenschnittstelle stellt eine kostengünstige Möglichkeit dar, die Übertragung von Daten über die zweite Datenschnittstelle zu unterbinden.

In bevorzugter Weise ist die erste Datenleitung dazu eingerichtet, Daten zwischen einem Gerät, das die erste Datenschnittstelle aufweist, und der ersten Datenübertragungseinrichtung zu übertragen. Entsprechend ist die zweite Datenleitung vorzugsweise dazu eingerichtet, Daten zwischen einem Gerät, das die zweite Datenschnittstelle aufweist, und der zweiten Datenübertragungseinrichtung zu übertragen.

Vorteilhafterweise sind beide Datenübertragungseinrichtungen bidirektionale Datenübertragungseinrichtungen. Das heißt, die Datenübertragungseinrichtungen können vorzugsweise Daten in eine erste Richtung sowie eine der ersten Richtung entgegengesetzte zweite Richtung übertragen. Alternativ ist es möglich, dass eine der beiden Datenübertragungseinrichtungen oder jede der beiden Datenübertragungseinrichtungen eine monodirektionale Datenübertragungseinrichtung ist.

Ferner ist es vorteilhaft, wenn die beiden Datenleitungen bidirektionale Datenleitungen sind. Alternativ ist es möglich, dass eine der beiden Datenleitungen oder jeder der beiden Datenleitungen eine monodirektionale Datenleitung ist.

In bevorzugter Weise wird die Übertragung von Daten über die zweite Datenschnittstelle (nur dann) unterbunden, falls eine Übertragung von Daten über die erste Datenschnittstelle freigeschaltet ist oder freigeschaltet wird. Auf diese Weise kann sichergestellt werden, dass stets eine der beiden Datenübertragungseinrichtungen zur Übertragung genutzt werden kann.

Die erste Datenübertragungseinrichtung kann eine Datenübertragungseinrichtung eines ersten Typs, insbesondere ein Bus eines ersten Typs, sein. Die zweite Datenübertragungseinrichtung wiederum kann eine Datenübertragungseinrichtung eines vom ersten Typ verschiedenen zweiten Typs, insbesondere ein Bus eines zweiten Typs, sein. Dies ermöglicht es, dass derjenige Typ der Datenübertragungseinrichtungen zur Übertragung verwendet werden kann, der für den jeweiligen Anwendungsfall vorteilhafter ist.

Die beiden Datenübertragungseinrichtungen können sich grundsätzlich in einem beliebigen Parameter voneinander unterscheiden, beispielsweise in ihrer Datenübertragungsrate, insbesondere in ihrer Kanalkapazität, und/oder in ihrer maximalen Datenpaketgröße. Als Kanalkapazität kann eine maximal mögliche Datenübertragungsrate, mit welcher Daten fehlerfrei über die jeweilige Datenübertragungseinrichtung übertragen werden können, aufgefasst werden. Weiterhin können die Datenübertragungseinrichtungen auf unterschiedlichen Kommunikationsprotokollen basieren bzw. mit unterschiedlichen Kommunikationsprotokollen arbeiten.

Grundsätzlich ist es möglich, dass die erste und die zweite Datenübertragungseinrichtung Datenübertragungseinrichtungen desselben Typs sind. In solch einem Fall kann die zweite Datenübertragungseinrichtung z.B. aus Redundanzgründen vorgesehen sein.

Gemäß einer vorteilhaften Ausgestaltung der Erfindung sind beide Datenübertragungseinrichtungen als Bus oder als Netzwerk ausgestaltet. Prinzipiell ist es möglich, dass eine der beiden Datenübertragungseinrichtungen als Bus ausgestaltet ist und die andere der beiden Datenübertragungseinrichtungen als Netzwerk ausgestaltet ist.

Die erste Datenübertragungseinrichtung kann z.B. als zeitmultiplexe Mehrfachsteuerung, als Wire Train Bus oder als Ethernet Train Backbone ausgestaltet sein. Entsprechend kann die zweite Datenübertragungseinrichtung beispielsweise als zeitmultiplexe Mehrfachsteuerung, als Wire Train Bus oder als Ethernet Train Backbone ausgestaltet sein.

In einer bevorzugten Ausführung der Erfindung weist die erste Datenübertragungseinrichtung eine höhere Datenübertragungsrate und/oder eine höhere maximale Datenpaketgröße als die zweite Datenübertragungseinrichtung auf. Das heißt, in bevorzugter Weise wird diejenige der beiden Datenübertragungseinrichtungen zur Datenübertragung genutzt, die eine höhere Datenübertragungsrate und/oder eine höhere maximale Datenpaketgröße aufweist.

Grundsätzlich ist es jedoch möglich, dass die zweite Datenübertragungseinrichtung eine höhere Datenübertragungsrate und/oder eine höhere maximale Datenpaketgröße aufweist als die erste Datenübertragungseinrichtung. In diesem Fall wird die Übertragung von Daten über die zweite Datenschnittstelle z.B. dann unterbunden, falls die zweite Datenübertragungseinrichtung eine Funktionsstörung aufweist. Das heißt, im Falle einer Funktionsstörung der "schnelleren" der beiden Datenübertragungseinrichtungen, kann die "langsamere" der Datenübertragungseinrichtungen zur Datenübertragung genutzt werden. Weiterhin kann in dem Fall, dass die zweite Datenübertragungseinrichtung eine höhere Datenübertragungsrate und/oder eine höhere maximale Datenpaketgröße aufweist als die erste Datenübertragungseinrichtung, vorgesehen sein, dass die Übertragung von Daten über die zweite Datenschnittstelle dann unterbunden wird, falls die zweite Datenübertragungseinrichtung mehr Netzknoten aufweist als die erste Datenübertragungseinrichtung.

Erfindungsgemäß wird dasjenige Gerät, welches die zweite Datenschnittstelle aufweist, nach dem Abschalten der Energieversorgung der zweiten Datenschnittstelle weiterhin mit Energie, insbesondere mit elektrischer Energie, versorgt. Das heißt, es wird vorzugsweise nur die Energieversorgung der zweiten Datenschnittstelle und nicht des gesamten Geräts abgeschaltet. Auf diese Weise kann das Gerät, das die zweite Datenschnittstelle aufweist, nach Abschalten der Energieversorgung der zweiten Datenschnittstelle weiterhin aktiv sein bzw. betrieben werden.

Ferner kann, um die Übertragung von Daten über die zweite Datenschnittstelle zu unterbinden, die zweite Datenleitung unterbrochen werden. Als Unterbrechen einer Datenleitung kann vorliegend ein Auftrennen einer Datenleitung aufgefasst werden, z.B. mittels einer Unterbrechungseinrichtung, insbesondere mittels eines Schalters. Das Unterbrechen der zweiten Datenleitung stellt eine besonders zuverlässige Möglichkeit dar, die Übertragung von Daten über die zweite Datenschnittstelle zu unterbinden, insbesondere da hierbei zweckmäßigerweise die zweite Datenleitung physikalisch aufgetrennt wird.

Darüber hinaus kann, um die Übertragung von Daten über die zweite Datenschnittstelle zu unterbinden, innerhalb der zweiten Datenschnittstelle eine Übertragung von Daten unterbunden werden. Das Unterbinden der Übertragung von Daten innerhalb der zweiten Datenschnittstelle stellt ebenfalls eine kostengünstige Möglichkeit dar, die Übertragung von Daten über die zweite Datenschnittstelle zu unterbinden. Diese Möglichkeit ist außerdem vorteilhafterweise aufwandsgünstig mithilfe von Software umsetzbar. Eine Unterbindung der Übertragung von Daten innerhalb der zweiten Datenschnittstelle kann z.B. dadurch erreicht werden, dass ein datenleitendes Element der zweiten Datenschnittstelle unterbrochen wird.

Beim Unterbinden der Übertragung von Daten innerhalb der zweiten Datenschnittstelle wird zweckmäßigerweise eine Übertragung von Daten von der zweiten Datenschnittstelle zu einem anderen Element desjenigen Geräts, das die zweite Datenschnittstelle aufweist, unterbunden. Als Unterbrechen eines datenleitenden Elements der zweiten Datenschnittstelle kann ein Auftrennen dieses Elements aufgefasst werden, z.B. mittels einer Unterbrechungseinrichtung, insbesondere mittels eines Schalters. Dieser Schalter kann z.B. ein elektronisch betätigbarer Schalter, insbesondere ein mithilfe von Softwarefunktionen bzw. softwarebasierten Steuerbefehlen steuerbarer Schalter, sein.

Weiterhin ist eine beliebig geartete Kombination der zuvor genannten Maßnahmen möglich, um die Übertragung von Daten über die zweite Datenschnittstelle zu unterbinden.

Gemäß der Erfindung sind die erste Datenschnittstelle und die zweite Datenschnittstelle Schnittstellen desselben Steuergeräts. Es kann z.B. vorgesehen sein, dass von diesem Steuergerät die Übertragung von Daten über die zweite Datenschnittstelle unterbunden wird.

Dass das Gerät die Übertragung von Daten über die zweite Datenschnittstelle unterbindet, kann dahingehend aufgefasst werden, dass das Gerät eine Aktion auslöst, durch welche die Datenübertragung über die zweite Datenschnittstelle unterbunden wird.

Des Weiteren kann das oben beschriebene Verfahren bei einem Datenübertragungssystem mit mehr als zwei Datenübertragungseinrichtungen, mehr als zwei Datenleitungen und mehr als zwei Datenschnittstellen in analoger Weise zur Anwendung kommen.

Ferner betrifft die Erfindung ein Datenübertragungssystem, aufweisend eine erste und eine zweite Datenübertragungseinrichtung, ein Steuergerät mit einer ersten und einer zweiten Datenschnittstelle sowie eine erste Datenleitung, die mit der ersten Datenübertragungseinrichtung und der ersten Datenschnittstelle verbunden ist, und eine zweite Datenleitung, die mit der zweiten Datenübertragungseinrichtung und der zweiten Datenschnittstelle verbunden ist, wobei das Datenübertragungssystem eine Energieversorgungsleitung aufweist, die mit der zweiten Datenschnittstelle verbunden ist, wobei die Unterbrechungseinrichtung ein Element der Energieversorgungsleitung ist.

Erfindungsgemäß weißt das Datenübertragungssystem eine Unterbrechungseinrichtung auf, welche dazu eingerichtet ist, eine Übertragung von Daten über die zweite Datenschnittstelle zu unterbinden. Erfindungsgemäß weist das Datenübertragungssystem zudem eine Energieversorgungsleitung auf, die mit der zweiten Datenschnittstelle verbunden ist, wobei die Unterbrechungseinrichtung ein Element der Energieversorgungsleitung, ein Element der zweiten Datenleitung oder ein Element der zweiten Datenschnittstelle ist, wobei eine Energieversorgung der zweiten Datenschnittstelle abschaltbar ist, um die Übertragung von Daten über die zweite Datenschnittstelle zu unterbinden, und das Steuergerät nach dem Abschalten der Energieversorgung weiterhin mit Energie versorgbar ist. Hierdurch wird ein zuverlässiger Betrieb des Datenübertragungssystems ermöglicht.

Dieses Übertragungssystem kann insbesondere das zuvor im Zusammenhang mit dem Verfahren beschriebene Datenübertragungssystem sein. Das heißt, die zuvor genannten gegenständlichen Elemente können Elemente dieses Datenübertragungssystems sein. Umgekehrt kann das zuvor beschriebene Verfahren zum Betreiben dieses Datenübertragungssystems eingesetzt werden.

In einer ersten vorteilhaften Erfindungsvariante umfasst das Datenübertragungssystem ein Gerät, welches die erste und die zweite Datenschnittstelle aufweist. Vorzugsweise ist dieses Gerät dazu eingerichtet, einen Steuerbefehl an die Unterbrechungseinrichtung zu senden, insbesondere über eine Steuerleitung. Dieses Gerät kann insbesondere ein Steuergerät sein, welches z.B. ein Bestandteil einer Zugsteuerung ist.

Der Steuerbefehl kann beispielsweise ein Befehl zum Unterbinden einer Datenübertragung über die zweite Datenschnittstelle oder ein Befehl zum Freigeben einer Datenübertragung über die zweite Datenschnittstelle sein. Die Unterbrechungseinrichtung ist zweckmäßigerweise dazu eingerichtet, nach Erhalt eines solchen Steuerbefehls eine Übertragung von Daten über die zweite Datenschnittstelle zu unterbinden bzw. freizugeben.

Weiterhin kann die Unterbrechungseinrichtung eine Vorrichtung umfassen, welche dazu eingerichtet ist, einen Leitungsabschnitt irreversibel aufzutrennen. Eine solche Vorrichtung kann z.B. eine Heizvorrichtung zum Aufschmelzen eines Leitungsabschnitts sein. Allerdings ist es bevorzugt, wenn die Unterbrechungseinrichtung dazu eingerichtet ist, die Übertragung von Daten über die zweite Datenschnittstelle zu unterbinden und später wieder freizugeben.

Die Unterbrechungseinrichtung kann beispielsweise als Schalter, insbesondere als elektrisch betätigbarer Schalter, ausgestaltet sein. Denn ein Schalter stellt eine kosten- und aufwandsgünstige Möglichkeit dar, die Übertragung von Daten zu unterbinden und bei Bedarf wieder freizugeben. Der Schalter kann insbesondere ein elektronisch betätigbarer Schalter, insbesondere mithilfe von Softwarefunktionen bzw. softwarebasierten Steuerbefehlen steuerbarer Schalter, sein. Unter anderem kann die Unterbrechungseinrichtung ein Element eines der zuvor genannten Geräte sein.

Außerdem kann die Unterbrechungseinrichtung mit einer Steuerleitung verbunden sein. Dies kann insbesondere die zuvor erwähnte Steuerleitung sein. Über die Steuerleitung kann die Unterbrechungseinrichtung Steuerbefehle, insbesondere softwarebasierte Steuerbefehle, empfangen, beispielsweise zum Öffnen bzw. zum Schließen des Schalters. Des Weiteren ist es zweckmäßig, wenn die Unterbrechungseinrichtung mithilfe von Softwarefunktionen bzw. softwarebasierten Steuerbefehlen steuerbar ist.

Ferner kann das Datenübertragungssystem mehrere Unterbrechungseinrichtungen aufweisen, die jeweils dazu eingerichtet sind, eine Übertragung von Daten über die zweite Datenschnittstelle zu unterbinden. Eine dieser Unterbrechungseinrichtungen kann z.B. ein Element der Energieversorgungsleitung sein. Eine andere dieser Unterbrechungseinrichtungen kann z.B. ein Element der zweiten Datenleitung sein. Wiederum eine andere dieser Unterbrechungseinrichtungen kann ein Element der zweiten Datenschnittstelle sein.

Darüber hinaus kann das Datenübertragungssystem mindestens eine weitere Unterbrechungseinrichtung aufweisen, welche dazu eingerichtet ist, eine Übertragung von Daten über die erste Datenschnittstelle zu unterbinden. Insbesondere kann das Datenübertragungssystem mehrere solche weiteren Unterbrechungseinrichtungen aufweisen. Eine dieser weiteren Unterbrechungseinrichtungen kann z.B. ein Element einer Energieversorgungsleitung der ersten Datenschnittstelle sein. Eine andere dieser weiteren Unterbrechungseinrichtungen kann z.B. ein Element der ersten Datenleitung sein. Wiederum eine andere dieser weiteren Unterbrechungseinrichtungen kann ein Element der ersten Datenschnittstelle sein.

Weiterhin ist die Erfindung auf einen Schienenfahrzeugverband mit mehreren Wagen, insbesondere mit mehreren Triebwagen, und einem Datenübertragungssystem der zuvor beschriebenen Art gerichtet.

In bevorzugter Weise ist die zweite Datenübertragungseinrichtung des Datenübertragungssystems eine gemeinsame Datenübertragungseinrichtung mehrerer Wagen, beispielsweise aller Triebwagen, des Schienenfahrzeugverbands. Insbesondere kann die zweite Datenübertragungseinrichtung ein gemeinsamer Zugbus oder ein gemeinsamer Datenbus sein.

Als Zugbus kann ein Bus ausgefasst werden, der für eine Zugsteuerung vorgesehen ist. Der Datenbus kann z.B. ein Bus sein, der für ein Fahrgastinformationssystem verwendet wird.

Die erste Datenübertragungseinrichtung kann z.B. eine Datenübertragungseinrichtung nur eines einzigen Wagens oder von einem Teil der Wagen des Schienenfahrzeugverbands sein.

Weiterhin kann jede der beiden Datenübertragungseinrichtungen des Datenübertragungssystems eine gemeinsame Datenübertragungseinrichtung mehrerer Wagen, beispielsweise aller Triebwagen, des Schienenfahrzeugverbands sein. Jede der beiden Datenübertragungseinrichtungen kann beispielsweise ein gemeinsamer Zugbus oder ein gemeinsamer Datenbus sein.

In dem Fall, dass die erste und die zweite Datenschnittstelle Schnittstellen von verschiedenen (Steuer-)Geräten sind, können diese Geräte insbesondere in demselben Wagen des Schienenfahrzeugverbands angeordnet sein.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Die Merkmale können jedoch zweckmäßigerweise auch einzeln betrachtet und zu sinnvollen weiteren Kombinationen zusammengefasst werden. Insbesondere sind diese Merkmale jeweils einzeln und in beliebiger geeigneter Kombination mit dem erfindungsgemäßen Verfahren und dem erfindungsgemäßen Datenübertragungssystem kombinierbar. So sind Verfahrensmerkmale, gegenständlich formuliert, auch als Eigenschaft der entsprechenden Vorrichtungseinheit zu sehen und umgekehrt.

Auch wenn in der Beschreibung bzw. in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein. Ferner sind die Wörter "ein" bzw. "eine" nicht als Zahlwörter, sondern als unbestimmte Artikel zu verstehen.

Die oben beschriebenen Eigenschaften, Merkmale und Vorteile der Erfindung, sowie die Art und Weise, wie diese erreicht werden, werden klarer und deutlicher verständlich im Zusammenhang mit der folgenden Beschreibung der Ausführungsbeispiele der Erfindung, die im Zusammenhang mit den Zeichnungen näher erläutert werden. Die Ausführungsbeispiele dienen der Erläuterung der Erfindung und beschränken die Erfindung nicht auf die darin angegebenen Kombinationen von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und mit einem beliebigen der Ansprüche kombiniert werden.

Es zeigen:
- FIG 1: ein Datenübertragungssystem, welches zwei Datenübertragungseinrichtungen, zwei Datenleitungen sowie ein Steuergerät mit zwei Datenschnittstellen umfasst;
- FIG 2: ein weiteres Datenübertragungssystem, welches zwei Datenübertragungseinrichtungen, zwei Datenleitungen sowie zwei Steuergeräte mit jeweils einer Datenschnittstelle umfasst;
- FIG 3: einen ersten Schienenfahrzeugverband mit drei Triebwagen und einem Datenübertragungssystem;
- FIG 4: einen zweiten Schienenfahrzeugverband mit drei Triebwagen und einem anderen Datenübertragungssystem und
- FIG 5: einen dritten Schienenfahrzeugverband mit drei Triebwagen und noch einem anderen Datenübertragungssystem.

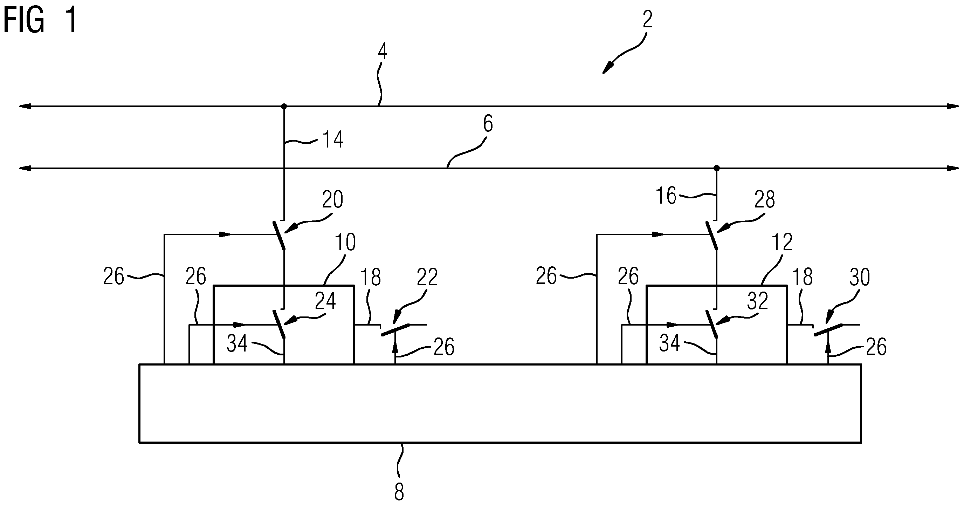

FIG 1 zeigt ein Datenübertragungssystem 2 in einer schematischen Darstellung. Das Datenübertragungssystem 2 umfasst eine erste Datenübertragungseinrichtung 4 sowie eine zweite Datenübertragungseinrichtung 6. Die beiden Datenübertragungseinrichtungen 4, 6 sind im vorliegenden Ausführungsbeispiel jeweils als Bus, insbesondere als Zugbus für eine Zugsteuerung, ausgestaltet. Des Weiteren umfasst das Datenübertragungssystem 2 ein Steuergerät 8 mit einer ersten Datenschnittstelle 10 und einer zweiten Datenschnittstelle 12.

Darüber hinaus weist das Datenübertragungssystem 2 eine erste Datenleitung 14 auf, die mit der ersten Datenschnittstelle 10 sowie mit der ersten Datenübertragungseinrichtung 4 verbunden ist. Außerdem weist das Datenübertragungssystem 2 eine zweite Datenleitung 16 auf, die mit der zweiten Datenschnittstelle 12 sowie mit der zweiten Datenübertragungseinrichtung 6 verbunden ist.

Die beiden Datenübertragungseinrichtungen 4, 6 sind bidirektionale Datenübertragungseinrichtungen und die beiden Datenleitungen 14, 16 sind bidirektionale Datenleitungen.

Des Weiteren weist die erste Datenübertragungseinrichtung 4 eine höhere Datenübertragungsrate auf als die zweite Datenübertragungseinrichtung 6. Bei den Datenübertragungseinrichtungen 4, 6 handelt es sich also um Datenübertragungseinrichtungen unterschiedlichen Typs.

Ferner umfasst das Datenübertragungssystem 2 zwei Energieversorgungsleitungen 18. Eine dieser beiden Energieversorgungsleitungen 18 ist mit der ersten Datenschnittstelle 10 verbunden und dazu eingerichtet, die erste Datenschnittstelle 10 mit Strom zu versorgen. Die andere der beiden Energieversorgungsleitungen 18 ist mit der zweiten Datenschnittstelle 12 verbunden und dazu eingerichtet, die zweite Datenschnittstelle 12 mit Strom zu versorgen.

Weiterhin weist das Datenübertragungssystem 2 im vorliegenden Ausführungsbeispiel eine erste Unterbrechungseinrichtung 20, eine zweite Unterbrechungseinrichtung 22 sowie eine dritte Unterbrechungseinrichtung 24 auf. Jede dieser drei Unterbrechungseinrichtungen 20, 22, 24 ist als elektrisch bzw. elektronisch betätigbarer Schalter ausgestaltet und ist dazu eingerichtet, eine Übertragung von Daten über die erste Datenschnittstelle 10 zu unterbinden. Zudem sind die drei Unterbrechungseinrichtungen 20, 22, 24 jeweils über eine Steuerleitung 26 mit dem Steuergerät 8 verbunden.

Die erste Unterbrechungseinrichtung 20 ist ein Element der ersten Datenleitung 14. Wohingegen die zweite Unterbrechungseinrichtung 22 ein Element derjenigen Energieversorgungsleitung 18 ist, die mit der ersten Datenschnittstelle 10 verbunden ist, und die dritte Unterbrechungseinrichtung 24 ein Element der ersten Datenschnittstelle 10 ist.

Ferner weist das Datenübertragungssystem 2 im vorliegenden Ausführungsbeispiel eine vierte Unterbrechungseinrichtung 28, eine fünfte Unterbrechungseinrichtung 30 sowie eine sechste Unterbrechungseinrichtung 32 auf. Jede der drei letztgenannten Unterbrechungseinrichtungen 28, 30, 32 ist als elektrisch bzw. elektronisch betätigbarer Schalter ausgestaltet und ist dazu eingerichtet, eine Übertragung von Daten über die zweite Datenschnittstelle 12 zu unterbinden. Weiterhin sind die drei letztgenannten Unterbrechungseinrichtungen 28, 30, 32 jeweils über eine Steuerleitung 26 mit dem Steuergerät 8 verbunden.

Die vierte Unterbrechungseinrichtung 28 ist ein Element der zweiten Datenleitung 16. Wohingegen die fünfte Unterbrechungseinrichtung 30 ein Element derjenigen Energieversorgungsleitung 18 ist, die mit der zweiten Datenschnittstelle 12 verbunden ist, und die sechste Unterbrechungseinrichtung 32 ein Element der zweiten Datenschnittstelle 12 ist.

In FIG 1 sind die zuvor genannten Unterbrechungseinrichtungen 20-24, 28-32 lediglich deshalb in einem geöffneten Zustand dargestellt, damit erkennbar ist, dass die Unterbrechungseinrichtungen 20-24, 28-32 jeweils als Schalter ausgestaltet sind. Im Betrieb des Datenübertragungssystems 2 sind vorzugsweise zumindest einige der Schalter geschlossen.

Die Unterbrechungseinrichtungen 20-24, 28-32 werden vom Steuergerät 8 gesteuert. Zum Ändern des Zustands ("offen" oder "geschlossen") der jeweiligen Unterbrechungseinrichtung 20-24, 28-32 sendet das Steuergerät 8 an die jeweilige Unterbrechungseinrichtung 20-24, 28-32 einen entsprechenden Steuerbefehl.

Damit Daten über die erste Datenschnittstelle 10 übertragen werden können, ist es erforderlich, dass die ersten drei Unterbrechungseinrichtungen 20, 22, 24 geschlossen sind, sodass die erste Datenschnittstelle 10 über die erste Datenleitung 14 kommunikativ an die erste Datenübertragungseinrichtung 4 gekoppelt ist. Dadurch wird erreicht, dass die erste Datenübertragungseinrichtung 4 - das heißt, diejenige der beiden Datenübertragungseinrichtungen 4, 6 mit der höheren Datenübertragungsrate - vom Steuergerät 8 zur Datenübertragung genutzt wird.

Damit eine unbeabsichtigte und/oder fehlerhafte Datenübertragung in der zweiten Datenübertragungseinrichtung 6 keine unbeabsichtigte Handlung im Steuergerät 8 auslösen kann bzw. damit das Steuergerät 8 keine unbeabsichtigte und/oder fehlerhafte Datenübertragung in der zweiten Datenübertragungseinrichtung 6 bewirken kann, wird eine Übertragung von Daten über die zweite Datenschnittstelle 12 unterbunden.

Um die Übertragung von Daten über die zweite Datenschnittstelle 12 zu unterbinden, wird mithilfe der vierten Unterbrechungseinrichtung 28 die zweite Datenleitung 16 unterbrochen bzw. aufgetrennt. Alternativ oder zusätzlich wird mithilfe der fünften Unterbrechungseinrichtung 30 die Energieversorgungsleitung 18, welche mit der zweiten Datenschnittstelle 12 verbunden ist, abgeschaltet, wobei das Steuergerät 8 (über eine figürlich nicht dargestellte Energieversorgungsleitung) weiterhin mit Strom versorgt wird. Alternativ oder zusätzlich wird mithilfe der sechsten Unterbrechungseinrichtung 32 ein datenleitendes Element 34 der zweiten Datenschnittstelle 12, über welches Daten von der zweiten Datenschnittstelle 12 zu einer oder mehreren anderen Funktionseinheiten des Steuergeräts 8 geleitet werden, unterbrochen und dadurch die Übertragung von Daten innerhalb der zweiten Datenschnittstelle 12 unterbunden.

Liegt nun z.B. eine Funktionsstörung der ersten Datenübertragungseinrichtung 4 und/oder der ersten Gerätschnittstelle 10 vor, werden die letztgenannten Unterbrechungseinrichtungen 28, 30, 32 in einen geschlossenen Zustand gebracht. Auf diese Weise wird die zweite Datenschnittstelle 12 über die zweite Datenleitung 16 kommunikativ an die erste Datenübertragungseinrichtung 4 gekoppelt. Dadurch wird erreicht, dass die zweite Datenübertragungseinrichtung 6 - das heißt, diejenige der beiden Datenübertragungseinrichtungen 4, 6 mit der niedrigeren Datenübertragungsrate - vom Steuergerät 8 zur Datenübertragung genutzt wird.

Um in solch einem Fall die Übertragung von Daten über die erste Datenschnittstelle 10 zu unterbinden, wird mithilfe der ersten Unterbrechungseinrichtung 20 die erste Datenleitung 14 unterbrochen bzw. aufgetrennt. Alternativ oder zusätzlich wird mithilfe der zweiten Unterbrechungseinrichtung 22 die Energieversorgungsleitung 18, welche mit der ersten Datenschnittstelle 10 verbunden ist, abgeschaltet, wobei das Steuergerät 8 weiterhin mit Strom versorgt wird. Alternativ oder zusätzlich wird mithilfe der dritten Unterbrechungseinrichtung 24 ein datenleitendes Element 34 der ersten Datenschnittstelle 10, über welches Daten von der zweiten Datenschnittstelle 12 zu einer oder mehreren anderen Funktionseinheiten des Steuergeräts 8 geleitet werden, unterbrochen und dadurch die Übertragung von Daten innerhalb der ersten Datenschnittstelle 10 unterbunden.

Grundsätzlich ist eine beliebige der drei ersten Unterbrechungseinrichtungen 20, 22, 24 ausreichend, um die Übertragung von Daten über die erste Datenschnittstelle 10 zu unterbinden. Das heißt, auf eine oder zwei der drei ersten Unterbrechungseinrichtungen 20, 22, 24 könnte prinzipiell verzichtet werden.

Entsprechend ist grundsätzlich eine beliebige der drei anderen Unterbrechungseinrichtungen 28, 30, 32 ausreichend, um die Übertragung von Daten über die zweite Datenschnittstelle 12 zu unterbinden. Auf eine oder zwei der drei anderen Unterbrechungseinrichtungen 28, 30, 32 könnte also prinzipiell verzichtet werden.

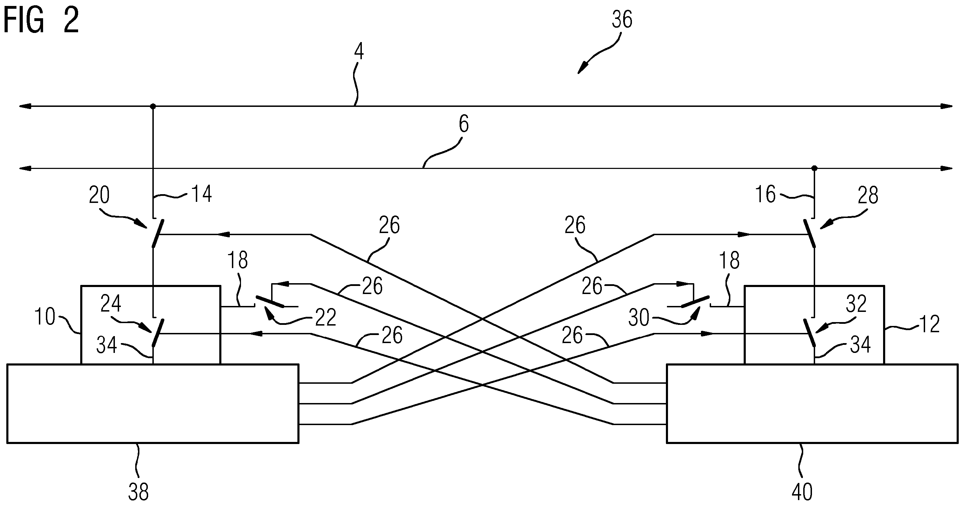

FIG 2 zeigt ein weiteres Datenübertragungssystem 36 in einer schematischen Darstellung.

Die Beschreibung des nachfolgenden Ausführungsbeispiels beschränkt sich primär auf die Unterschiede zum vorgehenden Ausführungsbeispiel, auf das bezüglich gleichbleibender Merkmale und Funktionen verwiesen wird. Im Wesentlichen gleiche bzw. einander entsprechende Elemente sind, soweit zweckdienlich, mit den gleichen Bezugszeichen bezeichnet und nicht erwähnte Merkmale sind im nachfolgenden Ausführungsbeispiel übernommen, ohne dass sie erneut beschrieben sind.

Das weitere Datenübertragungssystem 36 unterscheidet sich vom Datenübertragungssystem 2 auf FIG 1 unter anderem dadurch, dass das weitere Datenübertragungssystem 36 (anstelle des einzigen Steuergeräts 8) ein erstes Steuergerät 38 und ein zweites Steuergerät 40 aufweist.

Im vorliegenden Ausführungsbeispiel ist die erste Datenschnittstelle 10 ein Element des ersten Steuergeräts 38 und die zweite Datenschnittstelle 12 ein Element des zweiten Steuergeräts 40.

Des Weiteren sind die ersten drei Unterbrechungseinrichtungen 20, 22, 24 - das heißt, die in der ersten Datenleitung 14 angeordnete Unterbrechungseinrichtung 20, die in der ersten Datenschnittstelle 10 angeordnete Unterbrechungseinrichtung 24 und die in der Energieversorgungsleitung 18, über welche die erste Datenschnittstelle 10 mit Strom versorgt wird, angeordnete Unterbrechungseinrichtung 22 - jeweils über eine Steuerleitung 26 mit dem zweiten Steuergerät 40 verbunden. Entsprechend sind die anderen drei Unterbrechungseinrichtungen 28, 30, 32 jeweils über eine Steuerleitung 26 mit dem ersten Steuergerät 38 verbunden.

Das zweite Steuergerät 40 ist dazu eingerichtet, Steuerbefehle an die ersten drei Unterbrechungseinrichtungen 20, 22, 24 zu senden, wohingegen das erste Steuergerät 38 dazu eingerichtet ist, Steuerbefehle an die anderen drei Unterbrechungseinrichtungen 28, 30, 32 zu senden.

Im vorliegenden Ausführungsbeispiel wird ein Unterbinden bzw. ein Freigeben einer Datenübertragung über die erste Datenschnittstelle 10 durch das zweite Steuergerät 40 ausgelöst, indem das zweite Steuergerät 40 einen entsprechenden Steuerbefehl an mindestens eine der ersten drei Unterbrechungseinrichtungen 20, 22, 24 sendet. Ein Unterbinden bzw. ein Freigeben einer Datenübertragung über die zweite Datenschnittstelle 12 hingegen wird durch das erste Steuergerät 38 ausgelöst, indem das erste Steuergerät 38 einen entsprechenden Steuerbefehl an mindestens eine der anderen drei Unterbrechungseinrichtungen 28, 30, 32 sendet.

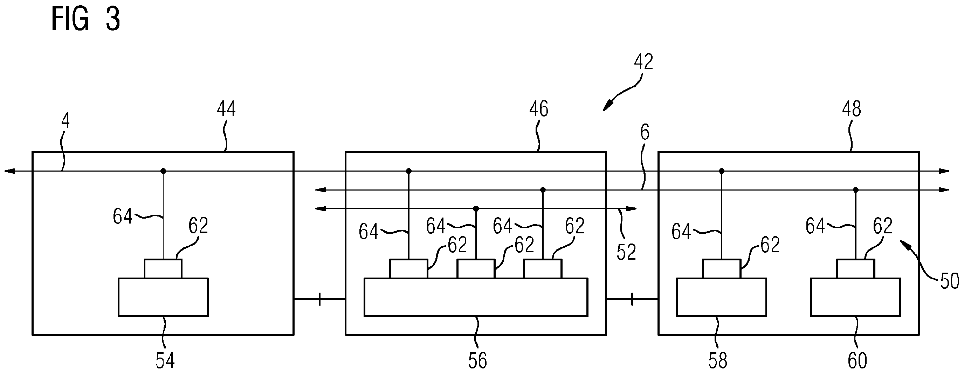

FIG 3 zeigt einen ersten Schienenfahrzeugverband 42 in einer schematischen Darstellung. Der Schienenfahrzeugverband 42 umfasst einen ersten Triebwagen 44, einen zweiten Triebwagen 46 sowie einen dritten Triebwagen 48. Neben diesen drei Triebwagen 44, 46, 48 kann der Schienenfahrzeugverband 42 weitere figürlich nicht dargestellte Wagen umfassen.

Ferner weist der Schienenfahrzeugverband 42 ein Datenübertragungssystem 50 auf, welches ein Bestandteil einer Zugsteuerung ist. Das Datenübertragungssystem 50 umfasst eine erste Datenübertragungseinrichtung 4, eine zweite Datenübertragungseinrichtung 6 sowie eine dritte Datenübertragungseinrichtung 52, wobei die Datenübertragungseinrichtungen 4, 6, 52 jeweils als Zugbus ausgestaltet sind. Zudem weist die zweite Datenübertragungseinrichtung 6 eine höhere Datenübertragungsrate auf als die erste Datenübertragungseinrichtung 4. Die dritte Datenübertragungseinrichtung 52 wiederum weist eine höhere Datenübertragungsrate auf als die zweite Datenübertragungseinrichtung 6.

Die eine erste Datenübertragungseinrichtung 4 ist ein gemeinsamer Zugbus aller drei Triebwagen 44, 46, 48. Die zweite Datenübertragungseinrichtung 6 hingegen ist ein gemeinsamer Zugbus des zweiten und dritten Triebwagens 46, 48, nicht jedoch des ersten Triebwagens 44. Ferner ist die dritte Datenübertragungseinrichtung 52 ein Zugbus des zweiten Triebwagens 46, nicht jedoch der anderen beiden Triebwagen 44, 48.

Weiterhin umfasst das Datenübertragungssystem 50 ein erstes Steuergerät 54, das im ersten Triebwagen 44 angeordnet ist, ein zweites Steuergerät 56, das im zweiten Triebwagen 46 angeordnet ist, sowie ein drittes und ein viertes Steuergerät 58, 60, die jeweils im dritten Triebwagen 48 angeordnet sind.

Das erste, dritte und vierte Steuergerät 54, 58, 60 weisen jeweils eine einzige Datenschnittstelle 62 auf. Das zweite Steuergerät 56 hingegen weist drei Datenschnittstellen 62 auf.

Ferner sind die Datenschnittstelle 62 des ersten Steuergeräts 54 sowie die Datenschnittstelle 62 des dritten Steuergeräts 58 jeweils über eine Datenleitung 64 mit der ersten Datenübertragungseinrichtung 4 verbunden. Die Datenschnittstelle 62 des vierten Steuergeräts 60 ist über eine Datenleitung 64 mit der zweiten Datenübertragungseinrichtung 6 verbunden.

Weiter ist eine der drei Datenschnittstellen 62 des zweiten Steuergeräts 56 über eine Datenleitung 64 mit der ersten Datenübertragungseinrichtung 4 verbunden. Eine andere der drei Datenschnittstellen 62 des zweiten Steuergeräts 56 über eine Datenleitung 64 mit der zweiten Datenübertragungseinrichtung 6 verbunden. Darüber hinaus ist die dritte der drei Datenschnittstellen 62 des zweiten Steuergeräts 56 über eine Datenleitung 64 mit der dritten Datenübertragungseinrichtung 52 verbunden.

Weiterhin umfasst das Datenübertragungssystem 50 für jede der Datenschnittstellen 62 eine Energieversorgungsleitung, die mit der jeweiligen Datenschnittstelle 62 verbunden ist. Zudem umfasst das Datenübertragungssystem 50 für jede der Datenschnittstellen 62 mindestens eine Unterbrechungseinrichtung, die dazu eingerichtet ist, eine Übertragung von Daten über die jeweilige Datenschnittstelle 62 zu unterbinden, und eine Steuerleitung zum Übermitteln von Steuerbefehlen an die jeweilige Unterbrechungseinrichtung. Einer besseren Übersichtlichkeit halber sind die Energieversorgungsleitungen, die Unterbrechungseinrichtung und die Steuerleitungen in FIG 3 sowie in den nachfolgenden Figuren nicht dargestellt.

Eins der Steuergeräte 54, 56, 58, 60 wird als Master-Steuergerät betrieben und die übrigen der Steuergeräte 54, 56, 58, 60 werden als Slave-Steuergeräte betrieben.

Damit alle Steuergeräte 54, 56, 58, 60 untereinander oder mit anderen Komponenten des Schienenfahrzeugverbands Daten austauschen können, wird die erste Datenübertragungseinrichtung 4 zur Datenübertragung genutzt, da die erste Datenübertragungseinrichtung 4 - im Gegensatz zu den andern beiden Datenübertragungseinrichtungen 6, 52 - eine gemeinsame Datenübertragungseinrichtung aller Triebwagen 44, 46, 48 ist.

Damit ferner eine unbeabsichtigte und/oder fehlerhafte Datenübertragung in der zweiten oder dritten Datenübertragungseinrichtung 6, 52 keine unbeabsichtigte Handlung in einem der Steuergeräte 54, 56, 58, 60 auslösen kann bzw. damit keins der Steuergeräte 54, 56, 58, 60 eine unbeabsichtigte und/oder fehlerhafte Datenübertragung in der zweiten oder dritten Datenübertragungseinrichtung 6, 52 bewirken kann, wird analog zu der im Zusammenhang mit FIG 1 und FIG 2 beschriebenen Art und Weise eine Übertragung von Daten über diejenigen Datenschnittstellen 62 unterbunden, die mit der zweiten oder dritten Datenübertragungseinrichtung 6, 52 verbunden sind.

Die Übertragung von Daten über die Datenschnittstelle 62 des vierten Steuergeräts 60 wird vom dritten Steuergerät 58 unterbunden. Das zweite Steuergerät 56 hingegen unterbindet selbst die Übertragung von Daten über diejenigen seiner Datenschnittstellen 62, die mit der zweiten oder dritten Datenübertragungseinrichtung 6, 52 verbunden sind.

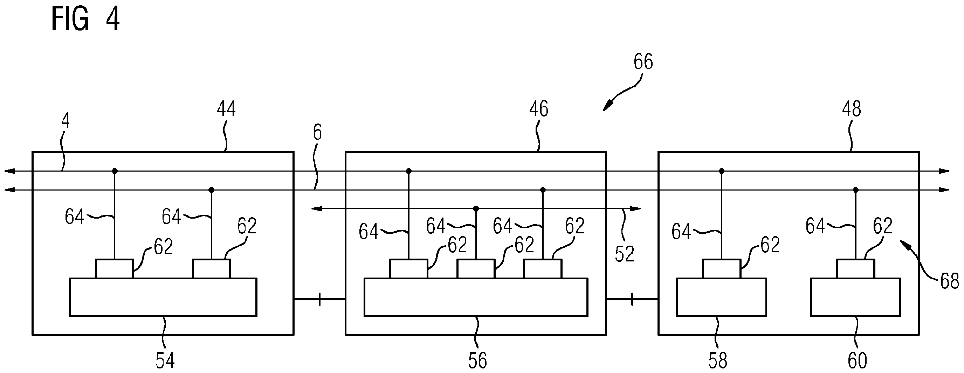

FIG 4 zeigt einen zweiten Schienenfahrzeugverband 66 in einer schematischen Darstellung.

Die Beschreibung der nachfolgenden Ausführungsbeispiele beschränkt sich primär auf die Unterschiede zum vorgehenden, im Zusammenhang mit FIG 3 beschriebenen Ausführungsbeispiel, auf das bezüglich gleichbleibender Merkmale und Funktionen verwiesen wird. Im Wesentlichen gleiche bzw. einander entsprechende Elemente sind, soweit zweckdienlich, mit den gleichen Bezugszeichen bezeichnet und nicht erwähnte Merkmale sind in den nachfolgenden Ausführungsbeispielen übernommen, ohne dass sie erneut beschrieben sind.

Das Datenübertragungssystem 68 des zweiten Schienenfahrzeugverbands 66 unterscheidet sich vom Datenübertragungssystem 50 aus FIG 3 unter anderem dadurch, dass beim Datenübertragungssystem 68 des zweiten Schienenfahrzeugverbands 66 sowohl die erste Datenübertragungseinrichtung 4 als auch die zweite Datenübertragungseinrichtung 6 jeweils eine gemeinsame Datenübertragungseinrichtung aller drei Triebwagen 44, 46, 48 ist.

Ferner weist beim vorliegenden Datenübertragungssystem 68 das erste Steuergerät 54 zwei Datenschnittstellen 62 auf. Eine dieser beiden Datenschnittstellen 62 ist über eine Datenleitung 64 mit der ersten Datenübertragungseinrichtung 4 verbunden und die andere der beiden Datenschnittstellen 62 ist über eine Datenleitung 64 mit der zweiten Datenübertragungseinrichtung 6 verbunden.

Im vorliegenden Ausführungsbeispiel wird die zweite Datenübertragungseinrichtung 6 zur Datenübertragung genutzt. Ferner wird analog zu der im Zusammenhang mit FIG 1 und FIG 2 beschriebenen Art und Weise eine Übertragung von Daten über diejenigen Datenschnittstellen 62, die mit der ersten oder dritten Datenübertragungseinrichtung 4, 52 verbunden sind, unterbunden.

Die Übertragung von Daten über die Datenschnittstelle 62 des dritten Steuergeräts 58 wird vom vierten Steuergerät 60 unterbunden. Das zweite Steuergerät 56 hingegen unterbindet selbst die Übertragung von Daten über diejenigen seiner Datenschnittstellen 62, die mit der ersten oder dritten Datenübertragungseinrichtung 4, 52 verbunden sind. Ebenso unterbindet das erste Steuergerät 54 selbst die Übertragung von Daten über diejenige seiner Datenschnittstellen 62, die mit der ersten Datenübertragungseinrichtung 4 verbunden ist.

Falls eine Funktionsstörung der zweiten Datenübertragungseinrichtung 6 vorliegt, kann alternativ die erste Datenübertragungseinrichtung 4 genutzt werden. In einem solchen Fall wird analog zu der im Zusammenhang mit FIG 1 und FIG 2 beschriebenen Art und Weise eine Übertragung von Daten über diejenigen Datenschnittstellen 62 unterbunden, die mit der zweiten oder dritten Datenübertragungseinrichtung 6, 52 verbunden sind.

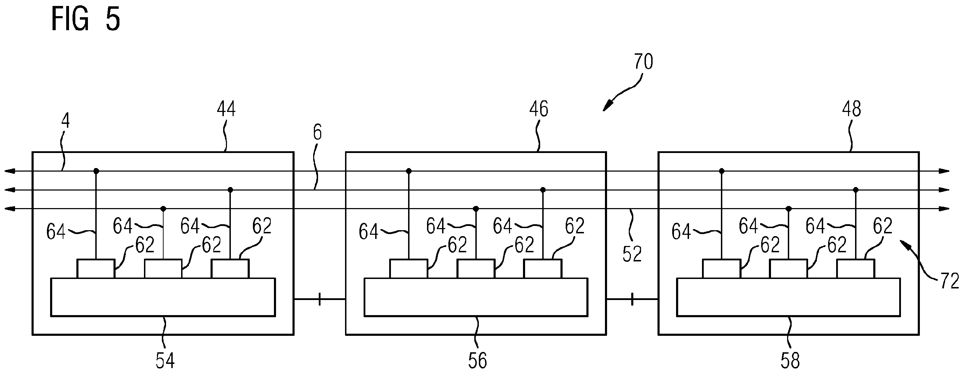

FIG 5 zeigt einen dritten Schienenfahrzeugverband 70 in einer schematischen Darstellung.

Das Datenübertragungssystem 72 des dritten Schienenfahrzeugverbands 70 unterscheidet sich vom Datenübertragungssystem 50 aus FIG 3 unter anderem dadurch, dass beim Datenübertragungssystem 72 des dritten Schienenfahrzeugverbands 70 alle drei Datenübertragungseinrichtungen 4, 6, 52 gemeinsame Datenübertragungseinrichtungen aller drei Triebwagen 44, 46, 48 sind.

Im vorliegenden Ausführungsbeispiel ist in jedem der drei Triebwagen 44, 46, 48 genau ein Steuergerät 54, 56, 58 angeordnet. Das heißt, es fehlt im dritten Triebwagen 48 ein zweites Steuergerät. Ferner weist beim vorliegenden Datenübertragungssystem 72 jedes der Steuergeräte 54, 56, 58 drei Datenschnittstellen 62 auf. Von den drei Datenschnittstellen 62 des jeweiligen Steuergeräts 54, 56, 58 ist jeweils eine Datenschnittstelle 62 über eine Datenleitung 64 mit der ersten Datenübertragungseinrichtung 4, eine andere Datenschnittstelle 62 über eine Datenleitung 64 mit der zweiten Datenübertragungseinrichtung 6 und die dritte Datenschnittstelle 62 über eine Datenleitung 64 mit der dritten Datenübertragungseinrichtung 52 verbunden.

Im vorliegenden Ausführungsbeispiel wird die dritte Datenübertragungseinrichtung 52 zur Datenübertragung genutzt. Analog zu der im Zusammenhang mit FIG 1 und FIG 2 beschriebenen Art und Weise wird eine Übertragung von Daten über diejenigen Datenschnittstellen 62, die mit der ersten oder zweiten Datenübertragungseinrichtung 4, 6 verbunden sind, unterbunden.

Jedes der drei Steuergeräte 54, 56, 58 unterbindet selbst die Übertragung von Daten über diejenigen seiner Datenschnittstellen 62, die mit der ersten oder zweiten Datenübertragungseinrichtung 4, 6 verbunden sind.

Falls eine Funktionsstörung der dritten Datenübertragungseinrichtung 52 vorliegt, kann alternativ eine der beiden anderen Datenübertragungseinrichtungen 4, 6 genutzt werden. In solchen einem Fall wird analog zu der im Zusammenhang mit FIG 1 und FIG 2 beschriebenen Art und Weise eine Übertragung von Daten über diejenigen Datenschnittstellen 62, die mit den jeweils anderen beiden Datenübertragungseinrichtungen verbunden sind, unterbunden.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können hieraus abgeleitet werden, ohne den Schutzumfang der Erfindung zu verlassen.

## Patentansprüche

1. Verfahren zum Betreiben eines Datenübertragungssystems (2, 36, 50, 68, 72), bei dem
- eine erste Datenübertragungseinrichtung (4, 6, 52) mit einer ersten Datenleitung (14, 16, 64) verbunden ist, welche mit einer ersten Datenschnittstelle (10, 12, 62) eines Steuergeräts (8, 38, 40, 54-60) verbunden ist,
- eine zweite Datenübertragungseinrichtung (4, 6, 52) mit einer zweiten Datenleitung (14, 16, 64) verbunden ist, welche mit einer zweiten Datenschnittstelle (10, 12, 62) des Steuergeräts (8, 38, 40, 54-60) verbunden ist, und
- über die erste Datenschnittstelle (10, 12, 62) Daten übertragen werden, wobei eine Übertragung von Daten über die zweite Datenschnittstelle (10, 12, 62) unterbunden wird, wobei die erste Datenübertragungseinrichtung und die zweite Datenübertragungseinrichtung vom Steuergerät zur Datenübertragung benutzt werden,
wobei eine Energieversorgung der zweiten Datenschnittstelle (10, 12, 62) abgeschaltet wird, um die Übertragung von Daten über die zweite Datenschnittstelle (10, 12, 62) zu unterbinden, und das Steuergerät (8, 38, 40, 54-60) nach dem Abschalten der Energieversorgung weiterhin mit Energie versorgt wird.

2. Verfahren nach Anspruch 1,
**dadurch gekennzeichnet, dass** die erste Datenübertragungseinrichtung (4, 6, 52) eine Datenübertragungseinrichtung eines ersten Typs, insbesondere ein Bus eines ersten Typs, ist und die zweite Datenübertragungseinrichtung (4, 6, 52) eine Datenübertragungseinrichtung eines vom ersten Typ verschiedenen zweiten Typs, insbesondere ein Bus eines zweiten Typs, ist.

3. Verfahren nach Anspruch 1 oder 2,
**dadurch gekennzeichnet, dass** beide Datenübertragungseinrichtungen (4, 6, 52) als Bus oder als Netzwerk ausgestaltet sind und die erste Datenübertragungseinrichtung (4, 6, 52) eine höhere Datenübertragungsrate aufweist als die zweite Datenübertragungseinrichtung (4, 6, 52).

4. Verfahren nach einem der vorhergehenden Ansprüche,
**dadurch gekennzeichnet, dass** die zweite Datenleitung (14, 16, 64) unterbrochen wird, um die Übertragung von Daten über die zweite Datenschnittstelle (10, 12, 62) zu unterbinden.

5. Verfahren nach einem der vorhergehenden Ansprüche,
**dadurch gekennzeichnet, dass**, um die Übertragung von Daten über die zweite Datenschnittstelle (10, 12, 62) zu unterbinden, innerhalb der zweiten Datenschnittstelle (10, 12, 62) eine Übertragung von Daten unterbunden wird, indem ein datenleitendes Element (34) der zweiten Datenschnittstelle (10, 12, 62) unterbrochen wird.

6. Verfahren nach einem der vorhergehenden Ansprüche,
**dadurch gekennzeichnet, dass** die erste und die zweite Datenschnittstelle (10, 12, 62) Schnittstellen des Steuergeräts (8, 54-58) sind und von diesem Steuergerät (8, 54-58) die Übertragung von Daten über die zweite Datenschnittstelle (10, 12, 62) unterbunden wird.

7. Datenübertragungssystem (2, 36, 50, 68, 72), aufweisend eine erste und eine zweite Datenübertragungseinrichtung (4, 6, 52), ein Steuergerät (8, 38, 40, 54-60) mit einer ersten und einer zweiten Datenschnittstelle (10, 12, 62) sowie eine erste Datenleitung (14, 16, 64), die mit der ersten Datenübertragungseinrichtung (4, 6, 52) und der ersten Datenschnittstelle (10, 12, 62) verbunden ist, und eine zweite Datenleitung (14, 16, 64), die mit der zweiten Datenübertragungseinrichtung (4, 6, 52) und der zweiten Datenschnittstelle (10, 12, 62) verbunden ist, wobei über die erste Datenschnittstelle Daten übertragen werden, und eine Unterbrechungseinrichtung (20-24, 28-32), welche dazu eingerichtet ist, eine Übertragung von Daten über die zweite Datenschnittstelle (10, 12, 62) zu unterbinden, wobei das Steuergerät dazu eingerichtet ist, die erste Datenübertragungseinrichtung und die zweite Datenübertragungseinrichtung zur Datenübertragung zu benutzen, wobei eine Energieversorgungsleitung (18), mit der zweiten Datenschnittstelle (10, 12, 62) verbunden ist, wobei die Unterbrechungseinrichtung (20-24, 28-32) ein Element der Energieversorgungsleitung (18), ein Element der zweiten Datenleitung (14, 16, 64) oder ein Element der zweiten Datenschnittstelle (10, 12, 62) ist,
wobei eine Energieversorgung der zweiten Datenschnittstelle (10, 12, 62) abschaltbar ist, um die Übertragung von Daten über die zweite Datenschnittstelle (10, 12, 62) zu unterbinden, und das Steuergerät (8, 38, 40, 54-60) nach dem Abschalten der Energieversorgung weiterhin mit Energie versorgbar ist.

8. Datenübertragungssystem (2, 36, 50, 68, 72) nach Anspruch 7,
**gekennzeichnet durch** das Steuergerät (8, 54-58), welches die erste und die zweite Datenschnittstelle (10, 12, 62) aufweist und dazu eingerichtet ist, einen Steuerbefehl an die Unterbrechungseinrichtung (20-24, 28-32) zu senden.

9. Datenübertragungssystem (2, 36, 50, 68, 72) nach Anspruch 7 oder 8,
**dadurch gekennzeichnet, dass** die Unterbrechungseinrichtung (20-24, 28-32) als elektrisch betätigbarer Schalter ausgestaltet ist.

10. Schienenfahrzeugverband (42, 66, 70) mit mehreren Triebwagen (44, 46, 48) und einem Datenübertragungssystem (2, 36, 50, 68, 72) nach einem der Ansprüche 7 bis 9, wobei die zweite Datenübertragungseinrichtung (4, 6, 52) des Datenübertragungssystems (2, 36, 50, 68, 72) eine gemeinsame Datenübertragungseinrichtung aller Triebwagen (44, 46, 48) ist oder jede der beiden Datenübertragungseinrichtungen (4, 6, 52) des Datenübertragungssystems (2, 36, 50, 68, 72) eine gemeinsame Datenübertragungseinrichtung aller Triebwagen (44, 46, 48) ist.

## Claims

1. Method for operating a data transfer system (2, 36, 50, 68, 72) in which
- a first data transfer device (4, 6, 52) is connected to a first data line (14, 16, 64) that is connected to a first data interface (10, 12, 62) of a control unit (8, 38, 40, 54-60),
- a second data transfer device (4, 6, 52) is connected to a second data line (14, 16, 64) that is connected to a second data interface (10, 12, 62) of the control unit (8, 38, 40, 54-60), and
- data is transferred over the first data interface (10, 12, 62), wherein transfer of data over the second data interface (10, 12, 62) is prevented, wherein the first data transfer device and the second data transfer device are used by the control unit for data transfer,
wherein an energy supply to the second data interface (10, 12, 62) is switched off in order to prevent the transfer of data over the second data interface (10, 12, 62), and the control unit (8, 38, 40, 54-60) continues to be supplied with power after the energy supply has been switched off.

2. Method according to claim 1,
**characterised in that** the first data transfer device (4, 6, 52) is a data transfer device of a first type, in particular a bus of a first type, and the second data transfer device (4, 6, 52) is a data transfer device of a second type different from the first type, in particular a bus of a second type.

3. Method according to claim 1 or 2,
**characterised in that** both data transfer devices (4, 6, 52) take the form of a bus or a network, and the first data transfer device (4, 6, 52) has a higher data transfer rate than the second data transfer device (4, 6, 52).

4. Method according to one of the preceding claims,
**characterised in that**, in order to prevent the transfer of data over the second data interface (10, 12, 62), the second data line (14, 16, 64) is interrupted.

5. Method according to one of the preceding claims,
**characterised in that**, in order to prevent the transfer of data over the second data interface (10, 12, 62), transfer of data within the second data interface (10, 12, 62) is prevented, by interrupting a data-carrying element (34) of the second data interface (10, 12, 62).

6. Method according to one of the preceding claims,
**characterised in that** the first and the second data interface (10, 12, 62) are interfaces of the control unit (8, 54-58), and the transfer of data over the second data interface (10, 12, 62) is prevented by this control unit (8, 54-58).

7. Data transfer system (2, 36, 50, 68, 72), having a first and a second data transfer device (4, 6, 52), a control unit (8, 38, 40, 54-60) with a first and a second data interface (10, 12, 62), and a first data line (14, 16, 64) that is connected to the first data transfer device (4, 6, 52) and the first data interface (10, 12, 62), and a second data line (14, 16, 64) that is connected to the second data transfer device (4, 6, 52) and the second data interface (10, 12, 62), wherein data is transferred via the first data interface, and
an interrupt device (20-24, 28-32) that is intended to prevent transfer of data over the second data interface (10, 12, 62), wherein the control unit is intended to use the first data transfer device and the second data transfer device for data transfer,
wherein an energy supply line (18) is connected to the second data interface (10, 12, 62), wherein the interrupt device (20-24, 28-32) is an element of the energy supply line (18), an element of the second data line (14, 16, 64) or an element of the second data interface (10, 12, 62),
wherein an energy supply to the second data interface (10, 12, 62) can be switched off in order to prevent the transfer of data over the second data interface (10, 12, 62), and the control unit (8, 38, 40, 54-60) can continue to be supplied with power after the energy supply has been switched off.

8. Data transfer system (2, 36, 50, 68, 72) according to claim 7,
**characterised by** the control unit (8, 54-58) that includes the first and the second data interface (10, 12, 62) and is intended to transmit a control command to the interrupt device (20-24, 28-32).

9. Data transfer system (2, 36, 50, 68, 72) according to claim 7 or 8,
**characterised in that** the interrupt device (20-24, 28-32) takes the form of an electrically actuable switch.

10. Rail vehicle set (42, 66, 70) having a plurality of multiple units (44, 46, 48) and a data transfer system (2, 36, 50, 68, 72) according to one of claims 7 to 9, wherein the second data transfer device (4, 6, 52) of the data transfer system (2, 36, 50, 68, 72) is a common data transfer device for all the multiple units (44, 46, 48), or each of the two data transfer devices (4, 6, 52) of the data transfer system (2, 36, 50, 68, 72) is a common data transfer device for all the multiple units (44, 46, 48).

## Revendications

1. Procédé pour faire fonctionner un système (2, 36, 50, 68, 72) de transmission de données, dans lequel
- un premier dispositif (4, 6, 52) de transmission de données est relié à une première ligne (14, 16, 64) de données, qui est reliée à une première interface (10, 12, 62) de données d'un appareil (8, 38, 40, 54 à 60) de commande,
- un deuxième dispositif (4, 6, 52) de transmission de données est relié à une deuxième ligne (14, 16, 64) de données, qui est reliée à une deuxième interface (10, 12, 62) de données de l'appareil (8, 38, 40, 54 à 60) de données, et
- on transmet des données par l'intermédiaire de la première interface (10, 12, 62) de données, une transmission de données par la deuxième interface (10, 12, 62) de données étant supprimée,
dans lequel le premier dispositif de transmission de données et le deuxième dispositif de transmission de données sont utilisés par l'appareil de commande pour la transmission de données,
dans lequel on arrête d'alimenter en énergie la deuxième interface (10, 12, 62) de données pour supprimer la transmission de données par l'intermédiaire de la deuxième interface (10, 12, 62) de données et on continue à alimenter en énergie l'appareil (8, 38, 40, 54 à 60) de commande après l'arrêt de l'alimentation en énergie.

2. Procédé suivant la revendication 1,
**caractérisé en ce que** le premier dispositif (4, 6, 52) de transmission de données est un dispositif de transmission de données d'un premier type, notamment un bus d'un premier type, et le deuxième dispositif (4, 6, 52) de transmission de données est un dispositif de transmission de données d'un deuxième type différent du premier type, notamment un bus d'un deuxième type.

3. Procédé suivant la revendication 1 ou 2,
**caractérisé en ce que** les deux dispositifs (4, 6, 52) de transmission de données sont conformés en bus ou en réseau et le premier dispositif (4, 6, 52) de transmission de données a un débit de transmission de données plus grand que celui du deuxième dispositif (4, 6, 52) de transmission de données.

4. Procédé suivant l'une des revendications précédentes,
caractérisé en ce l'on interrompt la deuxième ligne (14, 16, 64) de données pour supprimer la transmission de données par l'intermédiaire de la deuxième interface (10, 12, 62) de données.

5. Procédé suivant l'une des revendications précédentes,
**caractérisé en ce que** pour supprimer la transmission de données par l'intermédiaire de la deuxième interface (10, 12, 62) de données, on interrompt une transmission de données au sein de la deuxième interface (10, 12, 62) de données, en interrompant un élément (34) conduisant les données de la deuxième interface (10, 12, 62) de données.

6. Procédé suivant l'une des revendications précédentes,
**caractérisé en ce que** la première et la deuxième interfaces (10, 12, 62)de données sont des interfaces de l'appareil (8, 54 à 58) de commande et la transmission de données par la deuxième interface (10, 12, 62) de données est supprimée par cet appareil (8, 54 à 58) de données.

7. Système (2, 36, 50, 68, 72) de transmission de données, comportant un premier et un deuxième dispositifs (4, 6, 52) de transmission de données, un appareil (8, 38, 40, 54 à 60) de commande ayant une première et une deuxième interfaces (10, 12, 62) de données, ainsi qu'une première ligne (14, 16, 64) de données, qui est reliée au premier dispositif (4, 6, 52) de transmission de données et à la première interface (10, 12, 62) de données, et une deuxième ligne (14, 16, 64) de données, qui est reliée au deuxième dispositif (4, 6, 52) de transmission de données et à la deuxième interface (10, 12, 62) de données, dans lequel des données sont transmises par l'intermédiaire de la première interface de données, et un dispositif (20 à 24, 28 à 32) d'interruption, conçu pour supprimer une transmission de données par l'intermédiaire de la deuxième interface (10, 12, 62) de données,
l'appareil de commande étant conçu pour utiliser le premier dispositif de transmission de données et le deuxième dispositif de transmission de données pour transmettre des données,
dans lequel une ligne (18) d'alimentation en énergie est reliée à la deuxième interface (10, 12, 62) de données, le dispositif (20 à 24, 28 à 32) d'interruption étant un élément de la ligne (18) d'alimentation, un élément de la deuxième ligne (14, 16, 64) de données ou un élément de la deuxième interface (10, 12, 62) de données,
une alimentation en énergie de la deuxième interface (10, 12, 62) de données pouvant être arrêtée, afin de supprimer la transmission de données par l'intermédiaire de la deuxième interface (10, 12, 62) de données, et l'appareil (8, 38, 40, 54 à 60) de commande pouvant continuer à être alimenté en énergie après l'arrêt de l'alimentation en énergie.

8. Système (2, 36, 50, 68, 72) de transmission de données suivant la revendication 7,
**caractérisé par** l'appareil (8, 54 à 58) de commande, qui a la première et la deuxième interfaces (10, 12, 62) de données et qui est conçu pour envoyer une instruction de commande au dispositif (20 à 24, 28 à 32) d'interruption.

9. Système (2, 36, 50, 68, 72) de transmission de données suivant la revendication 7 OU 8,
**caractérisé en ce que** le dispositif (20 à 24, 28 à 32) d'interruption est conformé en interrupteur pouvant être actionné électriquement.

10. Rame (42, 66, 70) de véhicule ferroviaire, comprenant plusieurs motrices (44, 46, 48) et un système (2, 36, 50, 68, 72) de transmission de données suivant l'une des revendications 7 à 9, le deuxième dispositif (4, 6, 52) de transmission de données du système (2, 36, 50, 68, 72) de transmission de données étant un dispositif de transmission de données commun à toutes les motrices (44, 46, 48) ou chacun des deux dispositifs (4, 6, 52) de transmission de données du système (2, 36, 50, 68, 72) de transmission de données étant un dispositif de transmission de données commun à toute les motrices (44, 46, 48).
